Europäisches Patentamt

European Patent Office

Office européen des brevets

(19)

(11) Numéro de publication : **0 296 897 B1**

(12) **FASCICULE DE BREVET EUROPEEN**

(45) Date de publication du fascicule du brevet :
17.07.91 Bulletin 91/29

(51) Int. Cl.⁵ : **G01D 18/00, B62D 5/06**

(21) Numéro de dépôt : **88401153.7**

(22) Date de dépôt : **11.05.88**

(54) Procédé et dispositif de détermination d'une position de référence d'un mobile.

(30) Priorité : 27.05.87 FR 8707448

(43) Date de publication de la demande :
28.12.88 Bulletin 88/52

(45) Mention de la délivrance du brevet :
17.07.91 Bulletin 91/29

(84) Etats contractants désignés :
DE GB IT SE

(56) Documents cités :
EP-A- 0 196 477
DE-A- 3 424 826
FR-A- 2 415 828
US-A- 4 476 529

(73) Titulaire : **Siemens Aktiengesellschaft**
**Wittelsbacherplatz 2**
**W-8000 München 2 (DE)**

(72) Inventeur : **Filleau, Jean-Bernard**
**3, rue Flora Tristan**
**F-31320 Castanet Tolosan (FR)**

(74) Mandataire : **de Boisse, Louis Arnaud et al**
**CABINET de BOISSE 37, Avenue Franklin D.**
**Roosevelt**
**F-75008 Paris (FR)**

## Description

La présente invention est relative à un procédé et à un dispositif de détermination d'une position de référence d'un mobile en mouvement autour de cette position et, plus particulièrement, à un tel procédé et un tel dispositif conçus pour repérer une position angulaire centrale de référence d'un arbre oscillant en rotation autour de cette position tel qu'un arbre formant partie du mécanisme de direction d'un véhicule automobile.

On connaît des véhicules automobiles modernes dans lesquels un capteur de position angulaire absolue du volant fournit un signal représentatif de cette position à un calculateur électronique de commande de dispositifs embarqués dans le véhicule tels que servo-direction ou suspension adaptative, etc...

Le montage mécanique d'un tel capteur doit être réalisé avec une grande précision en ce qui concerne le repérage de la position angulaire "zéro" ou position de référence représentative de la position neutre du volant, sous peine de voir les mesures tirées du signal fourni par le capteur entachées d'erreurs dues à un réglage défectueux.

Quand bien même toutes les précautions auraient été prises pour assurer ce réglage avec la précision nécessaire lors du montage du capteur, cette position de référence n'en subirait pas moins des dérives pendant la vie du véhicule, dues par exemple à un changement des pneumatiques, à une intervention sur le réglage du parallélisme des roues, etc... Ces dérives affectent alors le signal délivré par le capteur et, par là même, le fonctionnement correct du dispositif qui exploite ce signal pour commander le fonctionnement d'une servo-direction ou d'une suspension adaptative, par exemple.

On connaît du brevet des Etats-Unis d'Amérique n° 4.633.214 un dispositif pour détecter la valeur centrale de l'angle de direction d'un véhicule, associé à un appareil de commande du rappel à l'extinction des indicateurs lumineux de changements de direction actionnés par le conducteur. Le dispositif est conçu pour filtrer des signaux parasites susceptibles d'affecter indûment cette valeur centrale, conservée et actualisée à l'aide d'un circuit intégrateur analogique à résistance et condensateur. Du fait même de sa destination, le dispositif décrit ne fait pas usage d'un calculateur numérique embarqué tels que ceux que l'on trouve dans les dispositifs de commande de servo-direction ou de suspension adaptatives.

La présente invention a précisément pour but de fournir un procédé et de réaliser un dispositif pour déterminer et actualiser la position de référence d'un mobile tel qu'un arbre de direction de véhicule automobile, le dispositif utilisant une partie de la puissance de calcul, notamment statistique, d'un calculateur numérique présent dans le véhicule et formant partie d'un dispositif de commande d'un équipement tel qu'une servo-direction ou une suspension adaptative, ce dispositif exploitant lui-même un signal fourni par un capteur de position angulaire de l'arbre de direction.

La présente invention a aussi pour but de fournir un tel procédé et de réaliser un tel dispositif qui soient propres à permettre une simplification du montage du capteur de position.

La présente invention a encore pour but de réaliser une actualisation continue du repérage de la position de référence du mobile, qui tienne compte des dérives accidentelles qui peuvent affecter le mouvement du mobile, d'une manière automatique.

On atteint ce but de l'invention, ainsi que d'autres qui apparaîtront dans la suite, avec un procédé de détermination d'une position de référence d'un mobile en mouvement autour de cette position, procédé suivant lequel on compare une valeur de mesure VNO mise en mémoire de la position de référence à une valeur de cette position estimée à partir de mesures courantes et on corrige la valeur mise en mémoire en fonction du résultat de la comparaison, caractérisé en ce que :

a) on échantillonne la mesure courante VX de la position du mobile,

b) on calcule, à partir d'échantillons de cette mesure et de la valeur VNO mise en mémoire une valeur de mesure estimée de la position de référence,

c) on incrémente ou on décrémente la valeur VNO mise en mémoire suivant que la valeur estimée est supérieure ou inférieure à VNO,

d) on répète itérativement les étapes a) à c).

Pour la mise en oeuvre de ce procédé, l'invention permet de réaliser un dispositif qui comprend, en combinaison, un capteur fournissant un signal représentatif de la position instantanée du mobile, des moyens d'échantillonnage du signal délivré par le capteur, des moyens de mémoire pour conserver la valeur de mesure VNO de la position de référence du mobile, des moyens de calcul, à partir de l'échantillonnage, d'une valeur de mesure estimée actuelle de la position de référence du mobile, des moyens pour incrémenter ou décrémenter la valeur VNO mise en mémoire suivant que la valeur estimée est supérieure ou inférieure à VNO, et des moyens d'itération de l'échantillonnage et des calculs prenant en compte la dernière valeur VNO mise en mémoire.

Au dessin annexé, donné seulement à titre d'exemple :

    – la figure 1 est un schéma du dispositif suivant l'invention,

    – la figure 2 est un graphe illustrant le fonctionnement d'un capteur de position formant partie du dispositif de la figure 1 et,

    – la figure 3 représente l'organigramme d'un programme exécuté par un calculateur formant partie du dispositif de la figure 1, pour la mise en oeuvre du procédé suivant l'invention.

On illustre l'invention dans son application à la détermination de la position neutre du volant d'un véhicule automobile. Il est clair cependant que cette application n'est pas limitative et il en sera d'ailleurs cité d'autres dans la suite, à titre d'exemple.

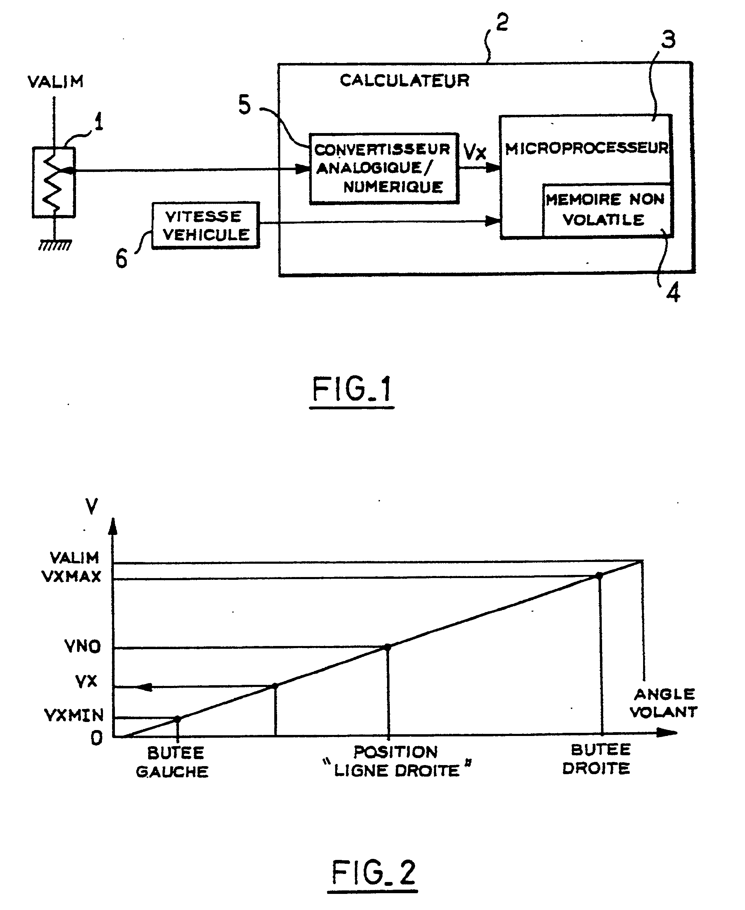

On se réfère à la figure 1 du dessin qui représente schématiquement l'organisation du dispositif suivant l'invention, dans l'application particulière citée ci-dessus. Un capteur de position angulaire 1, potentiométrique par exemple, est monté dans le mécanisme de direction d'un véhicule automobile pour permettre la détermination de la position du volant de ce véhicule. Cette position est un paramètre essentiel des calculs réalisés par les dispositifs de commande de servo-direction ou de suspension adaptative de certains véhicules automobiles modernes.

Le capteur 1 fournit donc un signal qui alimente un calculateur numérique 2 formant partie d'un tel dispositif de commande. Ce calculateur comprend un microprocesseur associé notamment à une mémoire non volatile 4, du type RAM secourue ou EEPROM par exemple. Un convertisseur analogique/numérique 5 alimenté par un signal de tension V délivré par le capteur potentiométrique 1 transmet au microprocesseur 3 une information numérisée représentative de l'amplitude de ce signal de tension, lui-même représentatif de la position angulaire absolue du volant, par rapport à une position de référence que l'invention vise à déterminer et à actualiser en utilisant à cet effet les moyens de calcul énoncés ci-dessus.

A ce point de la description de l'invention il faut s'arrêter un instant sur les caractéristiques du signal délivré par le capteur 1, en liaison avec l'examen du graphe de la figure 2, qui représente la tension V du signal en fonction de l'angle du volant.

Le signal, de valeur courante VX, varie entre des valeurs VXMIN et VXMAX correspondant respectivement aux positions extrêmes du volant définies par des butées mécaniques "gauche" et "droite" respectivement, la position du volant lorsque le véhicule circule en ligne droite correspondant à une valeur VNO du signal du capteur.

Il est essentiel d'observer pour une bonne compréhension de la présente invention que, dans l'application de cette invention à la détermination de la position du volant d'un véhicule automobile circulant normalement (notamment avec une vitesse suffisante), la différence :

$$PV = VX - VNO$$

est à valeur moyenne nulle, quelle que soit la sinuosité du parcours du véhicule. Autrement dit la somme dans le temps des amplitudes des coups de volant "à droite" est statistiquement égale à celle des coups de volant "à gauche", si l'intervalle de temps choisi pour le calcul de ces sommes est suffisamment long pour que les lois de la statistique puissent s'appliquer. Dans ces conditions VNO est l'amplitude du signal du capteur qui correspond à une position de référence du volant à partir de laquelle on mesure les amplitudes des coups de volant, à gauche et à droite qui, additionnées algébriquement donne une somme statistiquement nulle. Suivant l'invention on détermine par un calcul statistique cette valeur VNO en se basant sur cette observation. Ainsi on s'affranchit des contraintes de précision qui pèse sur le réglage du capteur lorsqu'on repère classiquement la position de référence du capteur et du volant par un réglage mécanique de la position de référence du capteur. En outre, la détermination statistique continue suivant l'invention d'une position de référence du volant prend automatiquement en compte des dérives dans le temps de cette position de référence, dérives qui ne pourraient être corrigées classiquement que par de nouveaux réglages mécaniques du capteur.

Le microprocesseur 3 du calculateur 2 du dispositif suivant l'invention permet d'exécuter les calculs nécessaires à la détermination de la valeur VNO repérant la position de référence du volant. Comme on l'a indiqué plus haut, il n'est pas nécessaire que ce microprocesseur soit spécifique au dispositif suivant l'invention et on peut utiliser pour ces calculs une partie de la puissance de calcul d'un microprocesseur formant partie d'un dispositif de commande d'une servo-direction ou d'une suspension adaptative dont le fonctionnement dépend, de toute façon, du signal délivré par le capteur de position 1.

Le capteur potentiométrique 1 fournit un signal au convertisseur-analogique qui convertit ce signal en une valeur numérique VX transmise au microprocesseur 3 qui calcule la différence :

$$PV = VX - VNO$$

cette valeur étant représentative de l'angle "volant". positive pour un virage à droite, négative pour un virage à gauche et nulle en ligne droite.

Le calculateur est mis en service par la clé de contact du véhicule. Suivant une caractéristique de la présente invention, lors de la fabrication du calculateur, une valeur initiale approchée de VNO est écrite dans la mémoire 4 non volatile. Cette valeur, correspondant par exemple à VALIM/2, VALIM étant la tension d'alimentation du capteur potentiométrique 1, sera modifiée par le calculateur en fonction des résultats du calcul d'estimation de VNO.

Le calcul de VNO par le microprocesseur est réalisé en permanence, aussi longtemps que le calculateur est sous tension, mais seulement lorsque la vitesse du véhicule est supérieure à un seuil prédéterminé. Pour ce but, le dispositif suivant l'invention comprend un capteur de vitesse du véhicule (6) qui délivre un signal de vitesse au microprocesseur. Celui-ci compare la valeur de ce signal à une valeur minimale prédéterminée pour déclencher éventuellement des moyens d'interruption des calculs. On élimine ainsi les positions du volant à l'arrêt et à basse vitesse qui ne sont statistiquement pas à valeur moyenne nulle.

Quand le calculateur n'est pas sous tension, la mémoire non volatile (4) conserve néanmoins la dernière valeur VNO présente dans la mémoire, pour une reprise ultérieure des calculs.

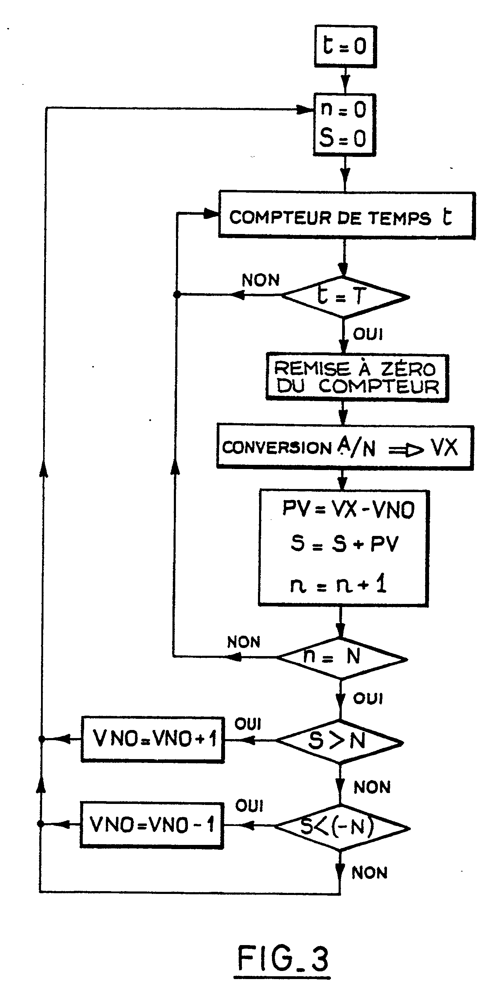

Le calcul de VNO est réalisé à l'aide d'un programme exécuté par le microprocesseur. On se réfèrera dans la suite à la Fig.3 du dessin, qui représente l'organigramme de ce programme, pour expliquer le procédé de détermination de VNO suivant l'invention, mise en oeuvre à l'aide de ce programme et du dispositif de la Fig.1.

L'acquisition par le microprocesseur de la valeur VX s'effectue à des intervalles de temps T constants mesurés à l'aide d'un compteur de temps associé au microprocesseur, de sorte que le microprocesseur calcule l'intégrale :

$$S = \Sigma \, PVi$$

pendant une durée prédéterminée $D = N \times T$ avec

$$PVi = VXi - VNO$$

$VXi$ = Valeur du ième échantillon de VX, $i$ prenant toutes les valeurs entières de 1 à N,

N = nombre de pas de calculs pendant la durée D

Au bout de cette durée de calcul D, le microprocesseur compare S à une valeur prédéterminée So dont on précisera la valeur dans la suite.

Si S > So, la valeur de VNO utilisée dans le calcul est considérée comme trop faible.

Si S < – So, la valeur de VNO utilisée dans le calcul est considérée comme trop forte.

Dans ces deux cas le microprocesseur commande une incrémentation (si S > So) ou une décrémentation (si S < – So) de la valeur VNO contenue dans la mémoire 4.

Si – So < S < + So, la valeur de VNO contenue dans cette mémoire n'est pas modifiée.

La décision de modification ou de non-modification de la valeur VNO mémorisée étant exécutée, le calcul reprend de manière itérative comme décrit ci-dessus, sur les N derniers échantillons de VXi reçus par le microprocesseur, à l'aide de la valeur éventuellement actualisée de VNO mise en mémoire. Cette valeur est alors utilisée comme représentative de la nouvelle position de référence du volant.

L'organigramme de la Fig.3 illustre la progression du calcul exécuté par le microprocesseur. A l'instant t = o du démarrage du calcul, un compteur d'échantillons est réglé à n = O alors que la somme S est aussi mise à zéro. Un compteur de temps se met en route pour déclencher à t = T la conversion du signal du capteur par le convertisseur 5 et l'acquisition par le microprocesseur d'une valeur numérique VX représentative de la valeur du signal à l'instant T. Le microprocesseur calcule alors PV et la somme S et incrémente le compte n. L'acquisition de VX et les calculs ci-dessus se répètent jusqu'à ce que n = N. La somme S est alors comparée à So et –So et une décision d'incrémentation ou de décrémentation de VNO est alors prise avant chargement éventuel en mémoire 4 d'une valeur VNO actualisée.

Le type de correction à apporter à VNO est à adapter en fonction de divers paramètres liés aux conditions d'utilisation du véhicule. Suivant l'invention, pour un véhicule de tourisme, une valeur préférée de So est So = N, qui correspond à l'erreur minimum sur la somme S, du fait de la sommation de N différences PVi = VXi – VNo présentant chacune une précision de 1 pas numérique.

Une correction du type : incrémentation de VNO d'une unité si S > N ou décrémentation de VNO d'une unité si S < –N allie une bonne convergence et une bonne stabilité de VNO, même en conduite sur route sinueuse.

Dans un exemple de mise en oeuvre du procédé suivant l'invention on a obtenu des résultats satisfaisants avec les valeurs suivantes :

$$T = 30 \text{ ms} ; D = 2 \text{ mn} ; N = 4000$$

Le choix de So résulte d'un compromis entre la nécessité d'une correction rapide de VNO et le caractère souhaitable d'une stabilité minimum pour celle-ci.

Grâce à la présente invention, le montage mécanique du capteur de position est très simplifié. En effet point n'est besoin de régler mécaniquement avec précision la position du capteur par rapport à une position de référence ou "zéro" du capteur. Un réglage approximatif suffit puisque c'est par le procédé suivant l'invention que la position de référence sera déterminée, et actualisée, avec précision.

Bien entendu, l'invention n'est pas limitée à la détermination de VNO par sommation d'écarts VXi _ VNO comme décrit ci-dessus. D'autres procédés de calcul sont envisageables. A titre d'exemple on cite le filtrage numérique par lequel on calcule la valeur VNO à des intervalles de temps réguliers T, une valeur VNOn de VNO à l'instant $n \times T$ étant calculée par une relation du type :

$$VNOn = (VXn + p \times VNO_{n-1})/(p + 1)$$

p étant un facteur qui dépend de la constante de temps du filtre, cette relation établissant un filtrage du premier ordre. Ce type de calcul privilégie la rapidité de la convergence au détriment de la stabilité de VNO. Des filtres d'ordre supérieur sont également envisageables.

On peut aussi utiliser une analyse stochastique de la répartition des valeurs VXi pour en déduire une valeur moyenne VNO ou la méthode des moindres carrés pour rechercher la valeur VNO qui minimise l'expression :

$$\Sigma\,(VXi - VNO)^2$$

qui contient les N dernières valeurs VXi acquises par le calculateur.

En variante du procédé de détermination de VNO décrit ci-dessus, on peut aussi commander l'acquisition par le microprocesseur de la valeur VX à des intervalles de distance parcourue par le véhicule constants (par exemple à chaque tour de roue) et non pas à des intervalles de temps T constants.

L'invention n'est pas non plus limitée à la détermination de la position neutre du volant d'un véhicule et s'étend à la détermination d'une position neutre de tout mobile en mouvement autour d'une position de référence fixe, à des dérives temporelles près.

Dans le seul secteur technologique de l'automobile on peut citer en effet, à titre d'exemple, la détermination de la position de repos du papillon d'un carburateur muni d'un capteur de position angulaire, ainsi que de la valeur maximale de cette position angulaire correspondant à l'ouverture maximale du papillon. Les valeurs ainsi calculées sont actualisées automatiquement pendant la durée de vie du véhicule ce qui compense toute dérive due, par exemple, à l'usure des pièces mécaniques.

On peut citer encore la détermination des valeurs minimum et maximum de la hauteur de la caisse d'un véhicule muni de capteurs de hauteur entre moyeu de roue et châssis.

Les capteurs utilisables ne sont pas limités aux capteurs potentiométriques. Tout capteur fournissant une information absolue peut être utilisé, le calcul par le microprocesseur fournissant la valeur absolue issue du capteur correspondant à la référence physique recherchée. En outre, tout capteur de type incrémental, fournissant un signe de variation et associé à un système de comptage/décomptage pourra, par le procédé suivant l'invention, être utilisé pour fournir une information de position absolue, par rapport à une référence physique, référence associée à une valeur déterminée du dispositif de comptage/décomptage.

## Revendications

1. Procédé de détermination d'une position de référence d'un mobile en mouvement de part et d'autre de cette position, procédé suivant lequel on compare une valeur de mesure VNO mise en mémoire de la position de référence à une valeur de cette position estimée à partir de mesures courantes et on corrige la valeur mise en mémoire en fonction du résultat de la comparaison, caractérisé en ce que:

    a) on échantillonne la mesure courante VX de la position du mobile,

    b) on calcule, à partir d'échantillons de cette mesure et de la valeur VNO mise en mémoire une valeur de mesure estimée de la position de référence,

    c) on incrémente ou on décrémente la valeur VNO mise en mémoire suivant que la valeur estimée est supérieure ou inférieure à VNO,

    d) on répète itérativement les étapes a) à c).

2. Procédé conforme à la revendication 1, caractérisé en ce que, pour l'étape b), on analyse un nombre N prédéterminé d'échantillons successifs de la mesure VX de la position du mobile.

3. Procédé conforme à la revendication 2, caractérisé en ce que, pour les étapes b) et c), on calcule la somme :

$$S = \Sigma\,(VXi - VNO)$$

où VXi est la valeur de l'échantillon courant, VNO est la mesure de la position de référence mise en mémoire avant que ne commence l'échantillonnage, et on incrémente ou on décrémente la valeur VNO mise en mémoire suivant que $S > So$ ou $S < (-So)$, respectivement, So étant une valeur prédéterminée.

4. Procédé conforme à la revendication 3, dans lequel les mesures VXi et VNO sont numérisées, caractérisé en ce qu'on prend pour So la valeur N.

5. Procédé conforme à la revendication 2, caractérisé en ce que, pour l'étape b), on calcule par la méthode des moindres carrés la valeur de VNO qui minimise l'expression :
$\Sigma\,(VXi - VNO)^2$, VXi étant la mesure de l'échantillon courant.

6. Procédé conforme à la revendication 1, caractérisé en ce que, pour l'étape b), on réalise un filtrage numérique de la valeur VNO.

7. Procédé conforme à la revendication 6, caractérisé en ce qu'on réalise un filtrage numérique du premier ordre à des intervalles de temps T qui donne une valeur VNOn de VNO à l'instant n × T par la relation :

$$VNOn = (VXn + p \times VNO_{n-1})/(p + 1)$$

où VXn est la valeur de la position du mobile à l'instant d'échantillonnage n × T, et p un facteur qui dépend de la constante de temps du filtre.

8. Procédé conforme à la revendication 1, caractérisé en ce qu'on tire une valeur moyenne de la mesure de la position de référence du mobile pendant l'échantillonnage par analyse stochastique.

9. Procédé conforme à l'une quelconque des revendications précédentes, appliqué à la détermination et à l'actualisation de la valeur de mesure VNO de la position angulaire de référence du volant de direction d'un véhicule automobile, caractérisé en ce qu'on détecte la vitesse du véhicule et en ce qu'on exclut des calculs de détermination et d'actualisation de VNO les échantillonnages réalisés alors que cette vitesse est inférieure à une vitesse prédéterminée.

10. Procédé conforme à l'une quelconque des revendications 2 à 9, caractérisé en ce qu'on échantillonne la mesure VX pendant un intervalle de temps D prédéterminé, avec une période d'échantillonnage T = D/N.

11. Procédé conforme à la revendication 9, caractérisé en ce qu'on échantillonne la mesure VX à des intervalles constants de distance parcourue par le véhicule.

12. Dispositif pour la mise en oeuvre du procédé conforme à l'une quelconque des revendications précédentes, caractérisé en ce qu'il comprend, en combinaison, un capteur (1) fournissant un signal représentatif de la position instantanée du mobile, des moyens d'échantillonnage du signal délivré par le capteur, des moyens de mémoire (4) pour conserver la valeur de mesure VNO de la position de référence du mobile, des moyens de calcul (2, 3), à partir de l'échantillonnage, d'une valeur de mesure estimée actuelle de la position de référence du mobile, des moyens pour incrémenter ou décrémenter la valeur VNO mise en mémoire suivant que la valeur estimée est supérieure ou inférieure à VNO et des moyens d'itération de l'échantillonnage et des calculs prenant en compte la dernière valeur VNO mise en mémoire.

13. Dispositif conforme à la revendication 12, caractérisé en ce qu'il comprend un convertisseur analogique-numérique (5) alimenté par le signal délivré par le capteur (1), un microprocesseur (3) formant partie des moyens de calcul, ce microprocesseur (3) commandant la fourniture par le convertisseur d'échantillons numérisés du signal aux moyens de calcul (2).

14. Dispositif conforme à l'une quelconque des revendications 12 et 13, caractérisé en ce que les moyens de mémoire (4) comprennent une mémoire non-volatile capable de conserver la dernière valeur de VNO mise en mémoire avant une mise hors service du dispositif, jusqu'à la prochaine remise en service.

15. Dispositif conforme à l'une quelconque des revendications 12 à 14, caractérisé en ce qu'il comprend des moyens d'interruption des calculs réalisés par les moyens de calcul quand au moins une condition particulière n'est pas satisfaisante.

16. Dispositif conforme à la revendication 15, conçu pour déterminer une position angulaire de référence du volant d'un véhicule automobile, caractérisé en ce qu'il comprend des moyens de détection (6) de la vitesse du véhicule qui commandent la mise en oeuvre des moyens d'interruption quand cette vitesse est inférieure à une vitesse prédéterminée.

17. Dispositif conforme à l'une quelconque des revendications 12 à 16, caractérisé en ce que les moyens d'échantillonnage sont conçus pour prélever les échantillons avec une période d'échantillonnage T = D/N, D étant un intervalle de temps prédéterminé et N un nombre prédéterminé d'échantillons pris en compte par les moyens de calcul (2, 3).

18. Dispositif conforme à la revendication 16, caractérisé en ce que les moyens d'échantillonnage sont conçus pour prélever les échantillons à des intervalles constants de distance parcourue par le véhicule.

**Patentansprüche**

1. Verfahren zum Bestimmen einer Referenzposition eines beweglichen Körpers bei seiner Bewegung beidseitig zu dieser Position, bei welchem Verfahren man einen gespeicherten Meßwert VNO für die Referenzposition mit einem ausgehend von laufenden Messungen geschätzten Wert dieser Position vergleicht und den gespeicherten Wert in Abhängigkeit von dem Vergleichsergebnis korrigiert, dadurch gekennzeichnet, daß:

a) man den laufenden Meßwert VX für die Position des beweglichen Körpers einem Sampling unterzieht,

b) man ausgehend von den Samples dieses Meßwertes und dem gespeicherten Wert VNO einen geschätzten Meßwert für die Referenzposition berechnet,

c) man den gespeicherten Wert VNO in Abhängigkeit davon, ob der geschätzte Wert größer oder kleiner als VNO ist, inkrementweise vergrößert oder verringert,

d) man die Schritte a) bis c) iterativ wiederholt.

2. Verfahren nach Anspruch 1, dadurch gekennzeichnet, daß man für den Schritt b) eine vorgegebene Anzahl N aufeinanderfolgender Samples des Meßwertes VX für die Position des beweglichen Körpers analysiert.

3. Verfahren nach Anspruch 2, dadurch gekennzeichnet, daß man für die Schritte b) und c) die folgende Summe berechnet:

$$S = \Sigma (VXi - VNO),$$

worin VXi der laufende Samplingwert ist, VNO derjenige Meßwert für die Referenzposition ist, der vor Beginn des Samplings gespeichert wurde, und man den gespeicherten Wert VNO inkrementweise vergrößert oder verkleinert, je nachdem ob S > So oder S < (–So) ist, worin So ein vorgegebener Wert ist.

4. Verfahren nach Anspruch 3, bei dem die Meßwerte VXi und VNO digitalisiert sind, dadurch gekennzeichnet, daß man für So den Wert N nimmt.

5. Verfahren nach Anspruch 2, dadurch gekennzeichnet, daß man für den Schritt b) mit Hilfe des Verfahrens kleinster Fehlerquadrate den Wert von VNO berechnet, der den folgenden Ausdruck zu einem Minimum macht : $\Sigma$ (VXi – VNO)$^2$, worin VXi der laufende Samplingwert ist.

6. Verfahren nach Anspruch 1, dadurch gekennzeichnet, daß man für den Schritt b) eine Digitalfilterung des Wertes VNO durchführt.

7. Verfahren anch Anspruch 6, dadurch gekennzeichnet, daß man eine digitale Filterung erster Ordnung in Zeitintervallen T durchführt, die einen Wert VNOn von VNO im Augenblick n x T entsprechend der folgenden Beziehung ergeben :

$$VNOn = (VXn + p \times VNO_{n-1})/(p + 1),$$

worin VXn der Wert der Position des beweglichen Körpers im Samplingaugenblick n x T darstellt und p ein Faktor ist, der von der Zeitkonstanten des Filters abhängt.

8. Verfahren anch Anspruch 1, dadurch gekennzeichnet, daß man einen Mittelwert für die Messung der Referenzposition des beweglichen Körpers während des Samplings durch eine stochastische Analyse bildet.

9. Verfahren nach einem der vorhergehenden Ansprüche, das zum Bestimmen und Aktualisieren des Meßwertes VNO für die Winkel-Referenzposition des Lenkrades eines Kraftfahrzeuges eingesetzt wird, dadurch gekennzeichnet, daß man die Fahrzeuggeschwindigkeit erfaßt und daß man die ermittelten Samples von den Berechnungen zum Bestimmen und Aktualisieren von VNO ausschließt, solange diese Geschwindigkeit kleiner als eine vorgegebene Geschwindigkeit ist.

10. Verfahren nach einem der Ansprüche 2 bis 9, dadurch gekennzeichnet, daß man den Meßwert VX während eines vorgegebenen Zeitintervalls D einem Sampling mit der Samplingperiode T = D/N unterzieht.

11. Verfahren nach Anspruch 9, dadurch gekennzeichnet, daß man den Meßwert VX in vom Fahrzeug durchlaufenen konstanten Streckenintervallen einem Sampling unterzieht.

12. Vorrichtung zum Durchführen des Verfahrens nach einem der vorhergehenden Ansprüche, dadurch gekennzeichnet, daß sie in Kombination enthält : einen Empfänger (1), der ein die augenblickliche Position des beweglichen Körpers darstellendes Signal liefert, eine Samplingeinrichtung für das von dem Empfänger abgegebene Signal, einen Speicher (4) zum Speichern des Meßwertes VNO für die Referenzposition des beweglichen Körpers, eine Recheneinrichtung (2, 3), die ausgehend von dem Sampling einen geschätzten Istwert für die Referenzposition des beweglichen Körpers errechnet, eine Einrichtung, die den gespeicherten Wert VNO in Abhängigkeit davon, ob der geschätzte Wert größer oder kleiner als VNO ist, inkrementweise vergrößert oder verringert, und Mittel zum Wiederholen des Sampling und der Rechenschritte unter Berücksichtigung des letzten gespeicherten Wertes VNO.

13. Vorrichtung nach Anspruch 12, dadurch gekennzeichnet, daß sie einen Analog-Digitalwandler (5), der mit dem vom Empfänger (1) abgegeben Signal gespeist wird, und einen Mikroprozessor (3) aufweist, der einen Teil der Recheneinrichtung bildet, wobei dieser Mikroprozessor (3) die Abgabe der digitalisierten Samples des Signals durch den Wandler mit Hilfe der Recheneinrichtung (2) steuert.

14. Vorrichtung nach einem der Ansprüche 12 und 13, dadurch gekennzeichnet, daß die Speichereinrichtung (4) einen leistungsunabhängigen Speicher umfaßt, der den letzten Wert für VNO, der vor einer Außerbetriebsetzung der Vorrichtung gespeichert wurde, bis zu einer Wiederinbetriebnahme erhalten kann.

15. Vorrichtung nach einem der Ansprüche 12 bis 14, dadurch gekennzeichnet, daß sie eine Einrichtung umfaßt, die die von der Recheneinrichtung durchgeführten Berechnungen unterbricht, wenn mindestens eine Bedingung nicht zufriedenstellend ist.

16. Vorrichtung nach Anspruch 15 zum Bestimmen einer Winkel-Referenzposition des Lenkrades eines Kraftfahrzeuges, gekennzeichnet durch eine Detektoreinrichtung (6) zum Erfassen der Fahrzeuggeschwindigkeit, die die Inbetriebnahme der Unterbrechereinrichtung auslöst, wenn diese Geschwindigkeit kleiner als eine vorgegebene Geschwindigkeit ist.

17. Vorrichtung nach einem der Ansprüche 12 bis 16, dadurch gekennzeichnet, daß die Samplingeinrichtung so ausgebildet ist, daß sie die Samples mit einer Samplingperiode von T = D/N entnimmt, wobei D ein vorgegebenes Zeitintervall und N eine vorgegebene Anzahl von Samples darstellt, die von der Recheneinrichtung (2, 3) berücksichtigt werden.

18. Vorrichtung nach Anspruch 16, dadurch gekennzeichnet, daß die Samplingeinrichtung so ausgebildet ist, daß sie die Samples in vom Fahrzeug durchlaufenen konstanten Strekkenintervallen entnimmt.

## Claims

1. Method for determining a reference position of a moving body in motion on either side of this position, method according to which a stored measurement value VNO of the reference position is compared with a value of this position estimated from current measurements and the stored value is corrected as a function of the result of the comparison, characterised in that :

   a) the current measurement VX of the position of the moving body is sampled,

   b) from samples of this measurement and of the stored value VNO, an estimated measurement value of the reference position is calculated,

   c) the stored value VNO is incremented or decremented according as the estimated value is greater than or less than VNO,

   d) steps a) to c) are repeated iteratively.

2. Method according to Claim 1, characterised in that, for step b), a preset number N of successive samples of the measurement VX of the position of the moving body is analysed.

3. Method according to Claim 2, characterised in that, for steps b) and c), the sum :

$$S = \Sigma \ (VXi - VNO)$$

is calculated, where VXi is the value of the current sample, VNO is the measurement of the reference position stored before sampling begins, and the stored value VNO is incremented or decremented according as S > So or S < (–So) respectively, So being a preset value.

4. Method according to Claim 3, in which the measurements VXi and VNO are digitised, characterised in that the value N is taken for So.

5. Method according to Claim 2, characterised in that, for step b), the value of VNO which minimises the expression :
$\Sigma \ (VXi - VNO)^2$ is calculated by the least squares method, VXi being the measurement of the current sample.

6. Method according to Claim 1, characterised in that, for step b), a digital filtering of the value VNO is carried out.

7. Method according to Claim 6, characterised in that a first-order digital filtering is carried out at time intervals T, which gives a value VNOn of VNO at the instant $n \times T$ through the relationship :

$$VNOn = (VXn + p \times VNO_{n-1})/(p + 1)$$

where VXn is the value of the position of the moving body at the sampling instant $n \times T$, and p a factor which depends on the time constant of the filter.

8. Method according to Claim 1, characterised in that an average value of the measurement of the reference position of the moving body is extracted during the sampling, through stochastic analysis.

9. Method according to any one of the preceding claims, applied to the determination and to the updating of the measurement value VNO of the angular reference position of the steering wheel of a motor vehicle, characterised in that the speed of the vehicle is detected, and in that the samplings carried out whilst this speed is less than a preset speed are excluded from the calculations for determining and updating VNO.

10. Method according to any one of Claims 2 to 9, characterised in that the measurement VX is sampled during a preset time interval D, with a sampling period T = D/N.

11. Method according to Claim 9, characterised in that the measurement VX is sampled at constant intervals of distance travelled by the vehicle.

12. Device for implementing the method according to any one of the preceding claims, characterised in that it comprises, in combination, a sensor (1) providing a signal representative of the instantaneous position of the moving body, means for sampling the signal delivered by the sensor, storage means (4) for retaining the measurement value VNO of the reference position of the moving body, means (2, 3) for calculating, from the sampling, an up-to-date estimated measurement value of the reference position of the moving body, means for incrementing or decrementing the stored value VNO according as the estimated value is greater than or less than VNO and means for iterating the sampling and the calculations taking into account the last stored value VNO.

13. Device according to Claim 12, characterised in that it comprises an analogue/digital converter (5) fed by the signal delivered by the sensor (1), a microprocessor (3) forming part of the calculation means, this microprocessor (3) controlling the provision by the digitised sample converter of the signal to the calculation means (2).

14. Device according to either of Claims 12 and 13, characterised in that the storage means (4) comprise a non-volatile memory capable of retaining the last value of VNO stored before a switching-off of the device, until the next switching-on.

15. Device according to any one of Claims 12 to 14, characterised in that it comprises means for interrupting the calculations carried out by the calculation means when at least one particular condition is not satisfied.

16. Device according to Claim 15, designed for determining an angular reference position of the steering wheel of a motor vehicle, characterised in that it comprises means (6) for detecting the speed of the vehicle which control the implementation of the means of interruption when this speed is less than a preset speed.

17. Device according to any one of Claims 12 to 16, characterised in that the sampling means are designed to take the samples with a sampling period T = D/N, D being a preset tire interval and N a preset number of samples taken into account by the calculation means (2, 3).

18. Device according to Claim 16, characterised in that the sampling means are designed to take the samples at constant intervals of distance travelled by the vehicle.

## FIG.1

## FIG.2

$t = 0$

$n = 0$
$S = 0$

COMPTEUR DE TEMPS $t$

NON $\longleftarrow$ $t = T$

OUI

REMISE À ZÉRO
DU COMPTEUR

CONVERSION $A/N \Rightarrow VX$

$PV = VX - VNO$

$S = S + PV$

$n = n + 1$

NON $\longleftarrow$ $n = N$

OUI

$VNO = VNO + 1$ $\xleftarrow{OUI}$ $S > N$

NON

$VNO = VNO - 1$ $\xleftarrow{OUI}$ $S < (-N)$

NON

## FIG. 3